# EUROPÄISCHE PATENTSCHRIFT

(11) **EP 0 889 087 B1**
(45) Veröffentlichungstag und Bekanntmachung des Hinweises auf die Patenterteilung: **08.05.2002**
(21) Anmeldenummer: 98110770.9
(22) Anmeldetag: 12.06.1998
(51) Int. Cl.: C08L 23/06, C08K 5/00, C08K 5/098, C08K 5/20

(54) **Formmasse auf der Grundlage von ultrahochmolekularem Polythylen und Verfahren zur Herstellung**
Moulding material based on polyethylene of ultra-high molecular weight and its production
Masse à mouler à base de polyéthylène à poids moléculaire ultra élevé et procédé pour sa préparation

(30) Priorität: 01.07.1997 DE 19727981
(43) Veröffentlichungstag der Anmeldung: 07.01.1999
(73) Patentinhaber: Buna Sow Leuna Olefinverbund GmbH, 06258 Schkopau (DE)
(72) Erfinder: Kerrinnes, Heinz-Jürgen, 06128 Halle (DE); Pretzsch, Ilona, 06242 Braunsbedra (DE); Kremtz, Christian, 06128 Halle (DE); Schellenberg, Jürgen, 06132 Halle (DE); Lohse, Gerd, 06258 Schkopau (DE)

(56) Entgegenhaltungen:
- EP-A- 0 343 863
- JP-A- 59 232 164
- US-A- 4 829 116
- US-A- 4 863 983
- US-A- 4 904 735
- DATABASE WPI Derwent Publications Ltd., London, GB; AN 85-113526 XP002113985 & JP 60 055042 A (SUMITOMO), 29. März 1985 (1985-03-29)

## Beschreibung

Die Erfindung betrifft eine Formmasse auf der Grundlage von ultrahochmolekularem Polyethylen zur Herstellung von geformten Körpern wie beispielsweise Platten oder Filterrohren sowie ein Verfahren zur Herstellung dieser Formmasse.

Zur Verbesserung der Verarbeitbarkeit üblicher fließfähiger Polyethylene (LLDPE, LDPE, HDPE) sind Zusammensetzungen auf der Grundlage von fluorenthaltenden Polymeren bekannt (US 4829116, US 4904735).

Es ist bekannt, daß sich ultrahochmolekulares Polyethylen (UHMW-PE) aufgrund seiner hohen Molmasse durch sehr gute Werkstoffeigenschaften wie hohe Zähigkeit auch bei tieferen Temperaturen, eine hohe Verschleißfestigkeit und gute Gleiteigenschaften auszeichnet. Aufgrund dieser sehr guten Materialeigenschaften ist andererseits aber die Verarbeitbarkeit dieser Polymeren stark eingeschränkt. Das hat im allgemeinen zu Verarbeitungsverfahren zur Herstellung von Formkörpern geführt, die entweder auf der Grundlage von pulverförmigem Material arbeiten oder aus Halbzeugen wie ramextrudierten Profilen und Stäben das Fertigteil durch mechanische Fertigungsmethoden herausarbeiten. Einige Verfahren sind für die Extrusion von ultrahochmolekularem Polyethylen bekannt. So gelingt die Herstellung von Extrudaten aus ultrahochmolekularem Polyethylen beispielsweise durch die Verwendung speziell entwickelter Extrusionsvorrichtungen und kompliziert gestalteter Temperaturprofile (z.B. DE 3644521, DE 3915603, DE 4232988). Hierbei erweist sich als äußerst nachteilig, daß für die Verarbeitung von ultrahochmolekularem Polyethylen spezielle Extrusionseinrichtungen bereitgestellt werden müssen und nicht auf übliche Extruder zurückgegriffen werden kann.

Andererseits sind Zusammensetzungen von ultrahochmolekularem Polyethylen mit einer verbesserten Extrudierbarkeit bekannt, die spezielle niedermolekulare Zusätze erfordern (z.B. DE 3213948, JP 60055042 JP 59232164, EP 343863). Hierbei ist insbesondere als nachteilig aufzuzeigen, daß sich der erforderliche hohe Anteil an niedermolekularen Komponenten negativ auf die Steifigkeit der Formteile auswirkt und beispielsweise zu stark erniedrigten Elastizitätsmoduli führt.

Der Erfindung liegt deshalb die Aufgabe zugrunde, eine Formmasse auf der Grundlage von ultrahochmolekularem Polyethylen sowie ein Verfahren zur Herstellung dieser Formmasse durch Extrusion zu entwickeln, das die genannten Nachteile nicht aufweist, so daß keine speziellen Extrusionsvorrichtungen erforderlich sind und die Produkteigenschaften nicht negativ beeinträchtigt werden.

Erfindungsgemäß enthält die Formmasse auf der Grundlage von ultrahochmolekularem Polyethylen.
A) mindestens 84,5 Masseprozent einer Polyethylen-Grundkompenente bestehend aus
   a) 10 bis 90 Masseprozent eines ultrahochmolekularen Polyethylens mit einer Viskositätszahl von 1800 bis 4000 ml/g nach DIN 53721 und
   b) 10 bis 90 Masseprozent eines Polyethylens hoher Dichte mit einer Viskositätszahl von 300 bis 1500 ml/g nach DIN 53721,
B) 0,05 bis 0,5 Masseprozent eines thermooxidativen Stabilisators bzw. eines Gemisches,
C) 0,02 bis 1 Masseprozent eines Fettsäuresalzes bzw. eines Gemisches,
D) 0,05 bis 2 Masseprozent eines Amidwachses bzw. eines Gemisches,
E) 0 bis 2,0 Masseprozent eines Paraffins,
F) 0,001 bis 10 Masseprozent einer Blendkomponente, enthaltend
   c) 0,5 bis 100 Masseprozent eines Fluorelastomers bzw. eines Gemisches mit einem Fluorgehalt von über 60 Masseprozent und
   d) 0 bis 99,5 Masseprozent eines Polyethylens niederer Dichte, sowie
   wobei die Summe von A) bis F) 100 % beträgt und die Menge von A) nicht größer als 99.87 sein darf
G) ggf. 0,1 bis 10 Masseteile, bezogen auf 100 Masseteile A) bis F), einer Farbkomponente bzw. eines Batches.

Gemäß der Erfindung kann die Formmasse 0,1 bis 0,4 Masseprozent eines thermooxidativen Stabilisators bzw. eines Gemisches enthalten.

Der Erfindung entsprechend kann die Formmasse 0,1 bis 0,5 Masseprozent eines Fettsäuresalzes bzw. eines Gemisches enthalten. Als Fettsäuresalz kann Calciumstearat, Zinkstearat bzw. ein Gemisch mit einer oder mehreren dieser Komponenten dienen.

Entsprechend der Erfindung kann als Amidwachs ein Bisstearamid Verwendung finden.

Erfindungsgemäß kann die Formmasse als Paraffin 0 bis 1,5 Masseprozent eines Paraffinöls enthalten.

Der Erfindung gemäß kann die Formmasse 0,1 bis 10 Masseprozent einer Blendkomponente aus
e) 0,5 bis 50 Masseprozent eines Fluorelastomers bzw. eines Gemisches mit einem Fluorgehalt von über 60 Masseprozent und
f) 50 bis 99,5 Masseprozent eines Polyethylens niederer Dichte enthalten. Dabei kann ein Fluorelastomer auf der Grundlage von Vinylidenfluorid, Hexafluorpropylen und/oder Tetrafluorethylen Verwendung finden.

Der Erfindung entsprechend kann die Formmasse 0,5 bis 7 Masseteile, bezogen auf 100 Masseteile A) bis F), einer Farbkomponente aus
g) 2 bis 70 Masseprozent Farbmittel und
h) 30 bis 98 Masseprozent eines Polyethylens niederer Dichte enthalten.

Erfindungsgemäß erfolgt die Herstellung der Formmasse auf der Grundlage von ultrahochmolekularem Polyethylen durch Extrusion in einem Einschnekkenextruder oder einer auf die gleiche Art und Weise arbeitenden anderen Einrichtung unter verminderter Scherwirkung bei Schmelztemperaturen der Polymerschmelze von 200 bis 250 °C.

Nachstehend soll die Erfindung an einigen ausgewählten Ausführungsbeispielen näher erläutert werden.

### Beispiel 1 (Vergleichsbeispiel)

In diesem Beispiel wurden als Polyethylen-Grundkomponente A) für die Formmasse auf der Grundlage von ultrahochmolekularem Polyethylen 99,5 Masseprozent eines Gemisches aus 50 Masseprozent eines ultrahochmolekularen Polyethylens mit einer Viskositätszahl J nach DIN 53728 bei einer Temperatur von 135 °C im Lösungsmittel Dekalin (Konzentration: 0,2 g/l) von 2294 ml/g und 50 Masseprozent eines Polyethylens hoher Dichte mit einer Viskositätszahl von 374 ml/g verwendet.

Als thermooxidativer Stabilisator B) dienten 0,3 Masseprozent eines Gemisches aus 33,3 Masseprozent Pentaerythrityltetrakis-[3-(3,5-di-tert.-butyl-4-hydroxyphenyl)propionat] und 66,7 Masseprozent Tris-(2,4-di.-tert.-butylphenyl)phosphit.

Als Fettsäuresalz wurden 0,1 Masseprozent eines Gemisches aus gleichen Anteilen an Calciumstearat und Zinkstearat eingesetzt.

Die Komponente D) wurde gleichfalls mit einem Anteil von 0,1 Masseprozent verwendet und enthielt Ethylenbisstearamid.

Die Herstellung der Formmasse erfolgte nach einer intensiven Vermischung der Komponenten durch Homogenisierung und Granulierung auf einem Zweischneckenextruder mit einem Schneckendurchmesser von 25 mm und einem Verhältnis von Schneckenlänge zu Schneckendurchmesser von 32 bei gegenläufigen Schneckenumdrehungen. Während dieser Verarbeitung mußte festgestellt werden, daß die Schmelztemperatur nicht unter 270 °C abgesenkt werden konnte, was im Zusammenhang mit der relativ hohen Scherwirkung des Zweischneckenextruders steht.

Eine Analyse der Eigenschaften des erhaltenen Extrudates bezüglich der Viskositätszahl ergab einen Wert von 303 ml/g, was deutlich unter den Werten der Ausgangskomponenten liegt und auf einen sehr starken molekularen Abbau des Polymerisates hinweist.

Dieses Beispiel bestätigt, daß bei nicht erfindungsgemäßer Vorgehensweise die Aufgabe der Erfindung nicht gelöst werden kann.

### Beispiel 2 (Vergleichsbeispiel)

Als Grundkomponente A) diente in diesem Beispiel die gleiche Grundkomponente wie im Beispiel 1 in einer Menge von 99,2 Masseprozent. Als thermooxidativer Stabilisator fanden ebenfalls 0,3 Masseprozent des in Beispiel 1 eingesetzten Gemisches Anwendung. Die Komponente F) enthielt 0,5 Masseprozent einer Blendkomponente aus 15 Masseprozent eines Fluorelastomers auf der Grundlage von Hexafluorpropylen und Tetrafluorethylen mit einem Fluorgehalt von 71,3 Masseprozent und 85 Masseprozent eines Polyethylens niederer Dichte.

Zur Herstellung der Formmasse wurde analog Beispiel 1 verfahren, jedoch zur Homogenisierung ein Einschneckenextruder mit einem Schneckendurchmesser von 45 mm und einem Verhältnis von Schneckenlänge zu Schneckendurchmesser von 25 eingesetzt. Die Schneckendrehzahl wurde zur Verminderung der Scherwirkung zu 90 U/min gewählt, wobei die Schmelztemperatur ca. 240 °C betrug.

Die Untersuchung der Produkteigenschaften ergab bezüglich der Viskositätszahl jedoch nur einen Wert von 680 ml/g, was gleichfalls wie im Beispiel 1 auf einen starken molekularen Abbau des Polymerisates hinweist.

Hieraus ist ersichtlich, daß bei nicht erfindungsgemäßer Vorgehensweise bezüglich der Zusammensetzung der Formmasse keine Produkte mit den gewünschten Eigenschaften und insbesondere einer hohen Viskositätszahl erzielt werden können.

### Beispiel 3

Zur Herstellung dieser Formmasse wurden die Komponenten und Mengen entsprechend den Angaben in der Tabelle 1 gewählt. Die Blendkomponente F) entsprach in ihrer Art und Zusammensetzung der in Beispiel 2 verwendeten Komponente. Die Vorgehensweise bei der Granulierung des Produktes erfolgte nach der in Beispiel 2 dargelegten.

Die Ergebnisse bezüglich der Bestimmung der Viskositätszahl der Formmasse sind in Tabelle 2 enthalten und bestätigen eine sehr gute molekulare Konfiguration der erhaltenen Formmasse.

Gleichfalls in der Tabelle 2 aufgeführt sind die Prüfergebnisse an der Formmasse bezüglich Zug-E-Modul nach DIN 53457 und Streckspannung nach DIN 53455, Vicat-Erweichungstemperatur nach ISO 306, Kugeldruckhärte nach DIN 53456 und Dichte (Preßplatte) nach ISO 118 sowie des FT-IR-spektroskopisch bestimmten Oxidationsgrades. Alle diese Kenngrößen bestätigen die sehr guten Eigenschaften der erhaltenen Formmasse, die nur durch die erfindungsgemäße Vorgehensweise erzielt werden können.

### Beispiel 4

Die Vorgehensweise in diesem Beispiel entsprach derjenigen des Beispiels 3. Die Zusammensetzung der Formmasse wurde nach den Angaben der Tabelle 1 gewählt, wobei als Komponente E) Paraffinöl verwendet wurde. Im Unterschied zu Beispiel 3 wurde als Blendkomponente F) ein reines Fluorelastomer auf der Grundlage von Vinylidenfluorid, Hexafluorpropylen und Tetrafluorethylen mit einem Fluorgehalt von 70,4 Masseprozent eingesetzt und als Schnekkendrehzahl 80 U/min verwendet.

Auch hier bestätigen die in Tabelle 2 aufgeführten Kennwerte die sehr guten Eigenschaften der erfindungsgemäß hergestellten Formmasse sowie des Verfahrens.

### Beispiel 5

Bei diesem Beispiel wurde nach den Angaben des Beispiels 4 und der Tabelle 1 verfahren, wobei jedoch ohne die Komponente E) gearbeitet und eine andere Komponente F) verwendet wurde. Die Blendkomponente F) enthielt in diesem Fall 2 Masseprozent eines Fluorelastomers auf der Grundlage von Tetrafluorethylen mit einem Fluorgehalt von 68 Masseprozent sowie 98 Masseprozent eines linearen Polyethylens niederer Dichte.

Die Ergebnisse der Prüfung dieser Formmasse in Tabelle 2 belegen die sehr guten Eigenschaften der gemäß der Erfindung hergestellten Formmasse und des Verfahrens.

### Beispiel 6

Die Formmasse dieses Beispiels wurde unter Verwendung von 3,0 Masseteilen einer Farbkomponente, bezogen auf 100 Masseteile A) bis F), hergestellt.

Diese Farbkomponente enthielt 40 Masseprozent Ruß sowie 60 Masseprozent eines Polyethylens niederer Dichte. Die Herstellungsweise sowie die weiteren Komponenten dieser Formmasse entsprachen den Angaben des Beispiels 5, jedoch bei einer Schneckendrehzahl von 90 U/min. Die gewählte Zusammensetzung geht aus der Tabelle 1 hervor.

Auch hier zeigen die Prüfergebnisse in der Tabelle 2 deutlich die vorteilhaften Eigenschaften der erfindungsgemäßen Formmasse sowie des Verfahrens.

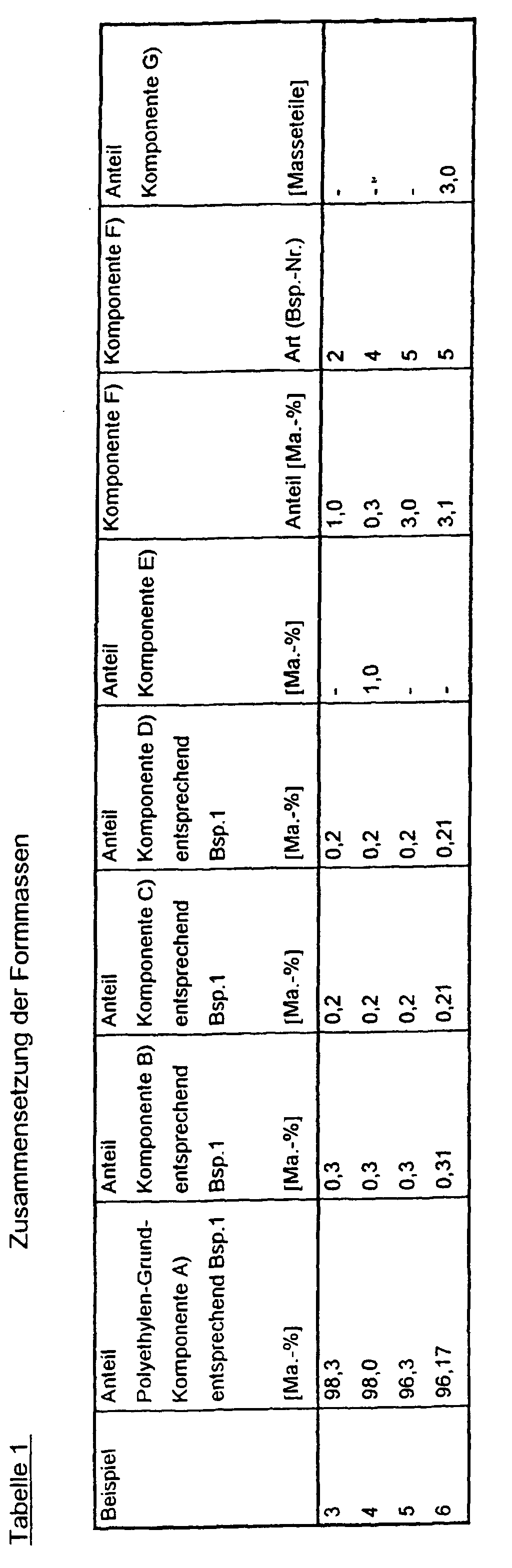

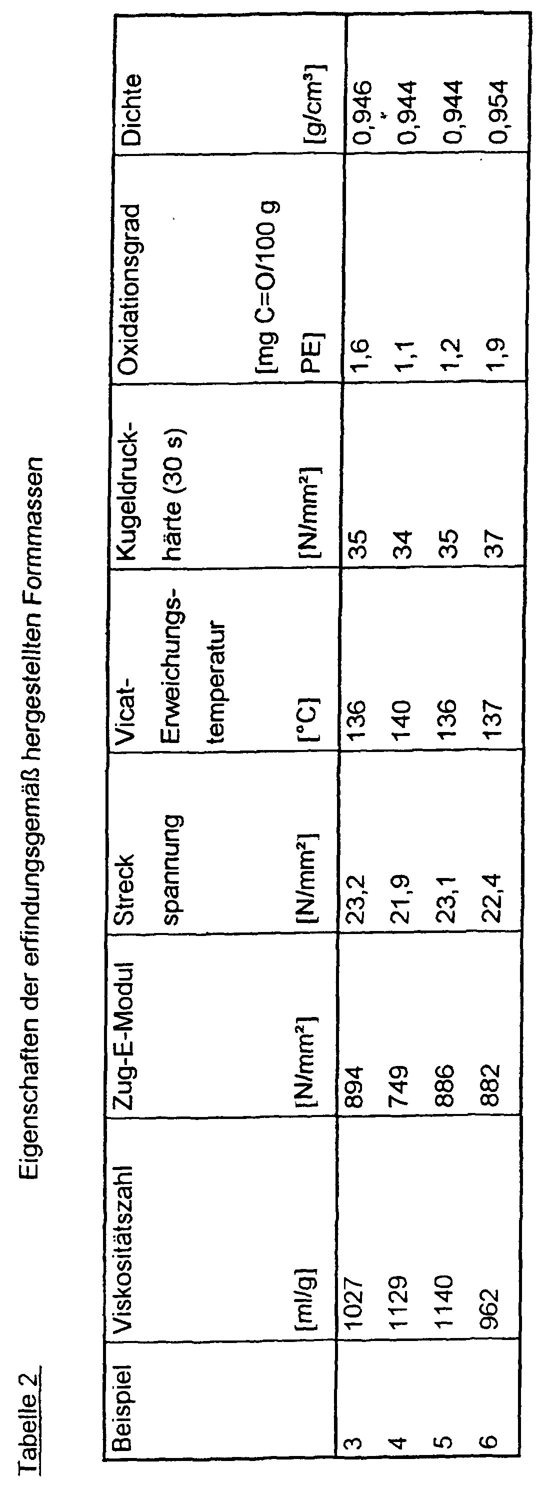

## Patentansprüche

1. Formmasse auf der Grundlage von ultrahochmolekularem Polyethylen, enthaltend
A) mindestens 84,5 Masseprozent einer Polyethylen-Grundkompenente bestehend aus
a) 10 bis 90 Masseprozent eines ultrahochmolekularen Polyethylens mit einer Viskositätszahl von 1800 bis 4000 ml/g nach DIN 53721 und
b) 10 bis 90 Masseprozent eines Polyethylens hoher Dichte mit einer Viskositätszahl von 300 bis 1500 ml/g nach DIN 53721,
B) 0,05 bis 0,5 Masseprozent eines thermooxidativen Stabilisators bzw. eines Gemisches,
C) 0,02 bis 1 Masseprozent eines Fettsäuresalzes bzw. eines Gemisches,
D) 0,05 bis 2 Masseprozent eines Amidwachses bzw. eines Gemisches,
E) 0 bis 2,0 Masseprozent eines Paraffins,
F) 0,001 bis 10 Masseprozent einer Blendkomponente, enthaltend
c) 0,5 bis 100 Masseprozent eines Fluorelastomers bzw. eines Gemisches mit einem Fluorgehalt von über 60 Masseprozent und
d) 0 bis 99,5 Masseprozent eines Polyethylens niederer Dichte, sowie
wobei die Summe der Komponenten A) - F) 100 % beträgt und die Menge von A) nicht größer als 99,87 % sein darf
G) ggf. 0,1 bis 10 Masseteile, bezogen auf 100 Masseteile A) bis F), einer Farbkomponente bzw. eines Batches.

2. Formmasse nach Anspruch 1, enthaltend als Kompoente B 0,1 bis 0,4 Masseprozent eines thermooxidativen Stabilisators bzw. eines Gemisches.

3. Formmasse nach den Ansprüchen 1 und 2, enthaltend als Komponente C 0,1 bis 0,5 Masseprozent eines Fettsäuresalzes bzw. eines Gemisches.

4. Formmasse nach den Ansprüchen 1 bis 3, enthaltend als Fettsäuresalz Calciumstearat, Zinkstearat bzw. ein Gemisch mit einer oder mehreren dieser Komponenten.

5. Formmasse nach den Ansprüchen 1 und 4, enthaltend als Amidwachs ein Bisstearamid.

6. Formmasse nach den Ansprüchen 1 bis 5, enthaltend als Komponente E 0 bis 1,5 Masseprozent eines Paraffinöls.

7. Formmasse nach den Ansprüchen 1 bis 6, enthaltend als Komponente F 0,1 bis 10 Masseprozent einer Blendkomponente aus
e) 0,5 bis 50 Masseprozent eines Fluorelastomers bzw. eines Gemisches mit einem Fluorgehalt von über 60 Masseprozent und
f) 50 bis 99,5 Masseprozent eines Polyethylens niederer Dichte.

8. Formmasse nach den Ansprüchen 1 bis 7, enthaltend ein Fluorelastomer auf der Grundlage von Vinylidenfluorid, Hexafluorpropylen oder Tetrafluorethylen oder einer Mischung dieser Komponenten.

9. Formmasse nach den Ansprüchen 1 bis 8, ggf. enthaltend als Komponente G 0,5 bis 7 Masseteile, bezogen auf 100 Masseteile A) bis F), einer Farbkomponente aus
g) 2 bis 70 Masseprozent Farbmittel und
h) 30 bis 98 Masseprozent eines Polyethylens niederer Dichte.

10. Verfahren zur Herstellung einer Formmasse nach Anspruch 1-9 durch Extrusion, **dadurch gekennzeichnet, daß** die Extrusion in einem Einschneckenextruder oder einer auf die gleiche Art und Weise arbeitenden anderen Einrichtung bei Schmelzetemperaturen der Polymerschmelze von 200 bis 250 °C erfolgt.

## Claims

1. Molding material based on an ultra high-molecular polyethylene containing
A) at least 84.5 percent by weight of a polyethylene major component consisting of
a) 10 to 90 percent by weight of an ultra high-molecular polyethylene with a viscosity number of 1,800 to 4,000 ml/g according to DIN 53721; and
b) 10 to 90 percent by weight of a high-density polyethylene with a viscosity number of 300 to 1,500 ml/g according to DIN 53721;
B) 0.05 to 0.5 percent by weight of a thermal-oxidative stabilizer or mixture thereof;
C) 0.02 to 1 percent by weight of a fatty acid salt or mixture thereof;
D) 0.05 to 2 percent by weight of an amide wax or mixture thereof;
E) 0 to 2.0 percent by weight of a paraffin;
F) 0.001 to 10 percent by weight of a blend component containing
c) 0.5 to 100 percent by weight of a fluoroelastomer or mixture thereof with a fluorine content of more than 60 percent by weight; and
d) 0 to 99.5 percent by weight of a low-density polyethylene,
whereby the total of components A) through F) is 100% and whereby the amount of A) may not be larger than 99.87%; and
G) if necessary, 0.1 to 10 parts by weight, relative to 100 parts by weight of A) through F), of a color component or batch respectively.

2. Molding material according to claim 1, containing 0.1 to 0.4 percent by weight of a thermal-oxidative stabilizer or mixture thereof as component B.

3. Molding material according to claims 1 and 2, containing 0.1 to 0.5 percent by weight of a fatty acid salt or mixture thereof as component C.

4. Molding material according to any of claims 1 through 3, containing calcium stearate, zinc stearate or a mixture of one or several of said components as fatty acid salt.

5. Molding material according to any of claims 1 through 4, containing a bis-stearamide as amide wax.

6. Molding material according to any of claims 1 through 5, containing 0 to 1.5 percent by weight of a paraffin oil as component E.

7. Molding material according to any of claims 1 through 6, containing 0.1 to 10 percent by weight of a blend component consisting of
e) 0.5 to 50 percent by weight of a fluoroelastomer or a mixture thereof with a fluorine content of more than 60 percent by weight; and
f) 50 to 99.5 percent by weight of a low-density polyethylene.

8. Molding material according to any of claims 1 through 7, containing a fluoroelastomer based on vinylidene fluoride, hexafluoropropylene or tetrafluoroethylene, or a mixture thereof.

9. Molding material according to any of claims 1 through 8, containing, if necessary, 0.5 to 7 parts by weight, relative to 100 parts by weight of A) through F), of a color component consisting of
g) 2 to 70 percent by weight of a coloring agent; and
h) 30 to 98 percent by weight of a low-density polyethylene.

10. Process to produce a molding material according to any of claims 1 through 9 through extrusion **characterized in that** said extrusion occurs in a single-screw extruder or some other equipment working to a similar mode, and at a melt temperature of the polymer melt of 200°C to 250°C.

## Revendications

1. Matière moulable à base de polyéthylène de très haut poids moléculaire contenant
A) au moins 84,5 pour cent en poids d'un composant de base de polyéthylène constitué de
a) 10 à 90 pour cent en poids d'un polyéthylène de très haut poids moléculaire avec un nombre de viscosité de 1800 à 4000 ml/g selon DIN 53721 et
b) de 10 à 90 pour cent en poids d'un polyéthylène de haute densité avec un nombre de viscosité de 300 à 1500 ml/g selon DIN 53721.
B) de 0,05 à 0,5 pour cent en poids d'un stabilisateur thermo-oxydatif ou d'un mélange,
C) de 0,02 à 1 pour cent en poids d'un sel d'acide gras ou d'un mélange
D) de 0,05 à 2 pour cent en poids d'une cire d'amide ou d'un mélange,
E) de 0 à 2,0 pour cent en poids d'une paraffine,
F) de 0,001 à 10 pour cent en poids d'un composant de blend, contenant
c) de 0,5 à 100 pour cent en poids d'un élastomère fluoré ou d'un mélange avec une teneur en fluor de plus de 60 pour cent en poids et
d) de 0 à 99,5 pour cent en poids d'un polyéthylène de basse densité, la somme des composants de A) à F) s'élevant à 100 % et la quantité de A) ne devant pas être supérieur à 99,87 %, ainsi que
G) éventuellement de 0,1 à 10 parts en poids, rapportées à 100 parts en poids de A) jusqu'à F) d'un composant de colorant ou d'un batch.

2. Matière moulable selon la revendication 1, contenant comme composant B de 0,1 à 0,4 pour cent en poids d'un stabilisant thermo-oxydatif ou d'un mélange.

3. Matière moulable selon les revendications 1 et 2, contenant comme composant C de 0,1 à 0,5 pour cent en poids d'un sel d'acide gras ou d'un mélange.

4. Matière moulable selon les revendications de 1 à 3, contenant comme sel d'acide gras du stéarate de calcium, du stéarate de zinc ou un mélange avec un ou plusieurs de ces composants.

5. Matière moulable selon les revendications 1 et 4, contenant comme cire d'amide un amide bisstéarique.

6. Matière moulable selon les revendications de 1 à 5, contenant comme composant E de 0 à 1,5 pour cent en poids d'une huile paraffinée.

7. Matière moulable selon les revendications de 1 à 6, contenant comme composant F de 0,1 à 10 pour cent en poids d'un composant de blend à partir de
e) 0,5 à 50 pour cent en poids d'un élastomère fluoré ou d'un mélange avec une teneur en fluor de plus de 60 pour cent en poids et
f) de 50 à 99,5 pour cent en poids d'un polyéthylène de basse densité.

8. Matière moulable selon les revendications de 1 à 7, contenant un élastomère fluoré à la base de fluorure de vinylidène, d'hexafluorpropylène et de tétrafluoréthylène ou d'un mélange de ces composants.

9. Matière moulable selon les revendications de 1 à 8, contenant éventuellement comme composant G de 0,5 à 7 parts en poids, rapportées à 100 parts en poids de A) à F), d'un composant de colorant à partir de
g) de 2 à 70 pour cent en poids d'un colorant et
h) de 30 à 98 pour cent en poids d'un polyéthylène de basse densité.

10. Procédé de fabrication d'une matière moulable selon les revendications de 1 à 9 par extrusion, **caractérisée par le fait que** l'extrusion a lieu dans une extrudeuse à une vis ou dans un dispositif travaillant de la même manière par des températures de fusion de 200 à 250 °C.
